# EUROPÄISCHE PATENTSCHRIFT

(11) **EP 3 380 337 B1**
(45) Veröffentlichungstag und Bekanntmachung des Hinweises auf die Patenterteilung: **07.10.2020**
(21) Anmeldenummer: 16801491.8
(22) Anmeldetag: 25.11.2016
(51) Int. Cl.: B60B 3/10, B60B 7/04, B60B 7/06, B60B 7/14, B60B 19/10

(54) **FAHRZEUG-RAD MIT ABDECKELEMENTEN FÜR DIE SPEICHEN-ZWISCHENRÄUME**
VEHICLE WHEEL WITH COVER ELEMENTS FOR THE SPACES BETWEEN SPOKES
ROUE DE VÉHICULE AVEC DES ÉLÉMENTS DE COUVERTURE POUR LES INTERVALLES ENTRE LES RAYONS

(30) Priorität: 26.11.2015 DE 102015223386
(43) Veröffentlichungstag der Anmeldung: 03.10.2018
(73) Patentinhaber: Bayerische Motoren Werke Aktiengesellschaft, 80809 München (DE)
(72) Erfinder: SCHOLZ, Hubert, 81543 München (DE); FAUSER, Markus, 81379 München (DE); RUDERER, Matthias, 95447 Bayreuth (DE)
(86) Internationale Anmeldenummer: PCT/EP2016/078866
(87) Internationale Veröffentlichungsnummer: WO 2017/089574

(56) Entgegenhaltungen:
- DE-A1-102011 010 509
- DE-A1-102013 222 044
- FR-A1- 2 998 507
- JP-A- H 042 502

## Beschreibung

Die Erfindung betrifft ein Fahrzeug-Rad mit Speichen, an denen Abdeckelemente für Speichen-Zwischenräume vorgesehen sind, welche sich temperaturabhängig derart verformen, dass bei höheren Temperaturen ein Luftdurchtritt durch einen Bereich des jeweiligen Speichen-Zwischenraums möglich ist,
welcher bei niedrigeren Temperaturen vom Abdeckelement abgedeckt ist. Zum Stand der Technik wird beispielshalber auf die DE 10 2013 222 044 A1 verwiesen.

Um die Räder eines Fahrzeugs im Hinblick auf einen geringen Luftwiderstand möglichst strömungsgünstig zu gestalten, wäre es vorteilhaft, wenn deren Ringabschnitt zwischen dem Nabenbereich und der einen Luftreifen aufnehmenden Felge außenseitig vollständig abgedeckt wäre, jedoch ist dies jedenfalls bei zweispurigen Kraftfahrzeugen, bei denen üblicherweise Radbremsen auf der dem Fahrzeug zugewandten Rad-Innenseite angeordnet sind, wegen der im Bedarfsfall erforderlichen Kühlung der Radbremsen nicht kontinuierlich darstellbar. Daher wurden bereits unterschiedliche Ausgestaltungen vorgeschlagen, wie die bei herkömmlichen Speichenrädern zwischen den Rad-Speichen liegenden Speichen-Zwischenräume veränderlich abgedeckt werden können, dahingehend, dass diese Zwischenräume bei niedrigeren Temperaturen abgedeckt sind und bei höheren Temperaturen, welche sich bei einem Bremsvorgang als Folge der Wärmeentwicklung an der als Reibungsbremse ausgebildeten Radbremse einstellen, geöffnet sind, um dann eine Abkühlung der Radbremse durch zu dieser vermehrt gelangende Umgebungsluft zu bewirken.

In der eingangs genannten Schrift sind Abdeckelemente für die Speichenzwischenräume eines Fahrzeug-Rades in Form einer dort sog. Felgenabdeckung mit Flügelelementen gezeigt, welche als Schichtverbund aus Materialien mit unterschiedlichen Wärmeausdehnungskoeffizienten ausgebildet sind und die sich somit unter Nutzung des Bimetallefekts selbsttätig geeignet verformen. Bspw. diese an sich überzeugende Technologie soll vorliegend in einer konstruktiv zuverlässigen Form dargestellt werden, d.h. vorliegend soll aufgezeigt werden, wie verformbare Abdeckelemente für die Speichen-Zwischenräume eines Rades eines Fahrzeugs und insbesondere eines Kraftfahrzeugs, welches mit hoher Fahrgeschwindigkeit bewegt werden kann, gestaltet und am Rad angebracht sein können. Insbesondere sollen diese Abdeckelemente auch bei Fahrgeschwindigkeiten in der Größenordnung von 200 km/h sicher am Rad verbleiben und bei einer geringeren Geschwindigkeit bspw. in der Größenordnung von 100 km/h voll funktionsfähig sein, d.h. den zuvor abgedeckten Bereich eines Speichenzwischenraums ohne Schädigung freilegen zu können (= Aufgabe der vorliegenden Erfindung).

Eine erste Lösung dieser Aufgabe ist für ein Fzg.-Rad mit Speichen nach dem Oberbegriff des Anspruchs 1 dadurch gekennzeichnet, dass die Abdeckelemente die jeweiligen Speichen-Zwischenräume nicht vollflächig überdecken und je Zwischenraum neben einem sich temperaturabhängig verformenden Abdeckelement ein starres Deckelement vorgesehen ist, das den ihm zugeordneten Speichenzwischenraum-Bereich kontinuierlich abdeckt. Eine alternative zweite Lösung dieser Aufgabe ist für ein Fzg.-Rad mit Speichen nach dem Oberbegriff des Anspruchs 1 dadurch gekennzeichnet, dass in jedem Speichenzwischenraum zwei in Rad-Umfangsrichtung nebeneinander liegende Abdeckelemente vorgesehen sind, die an verschieden Speichen befestigt sind und die im nicht verformen Zustand mit ihren den Speichen abgewandten Kanten eng aneinander grenzen, während im verformten Zustand eines der Abdeckelemente in Rad-Drehachsrichtung betrachtet nach außen vom Fahrzeug weg gewölbt ist und das andere Abdeckelement nach innen zum Fahrzeug hin gewölbt ist. Vorteilhafte Aus- und Weiterbildungen sind Inhalt der Unteransprüche.

Vorzugsweise weisen die Abdeckelemente im nicht verformten Zustand, welchen sie bei normalen oder niedrigeren Temperaturen, d.h. im üblichen Zustand einnehmen, eine zumindest annähernd ebene Form auf, während sie im verformten und nur bei höheren Temperaturen, die sich in Folge eines stärkeren Bremsvorganges des mit diesem Rad ausgerüsteten Fahrzeugs einstellen, geeignet gewölbt oder auf sonstige Weise uneben sind. Die besagte Verformung oder Wölbung kann sich dabei selbstverständlich nur in einem solchen Bereich eines Abdeckelementes einstellen, welcher ausreichend frei, d.h. nicht in irgendeiner Weise angebunden ist.

Übliche Kraftfahrzeug-Räder heutiger Personenkraftwagen besitzen eine relativ geringe Zahl von Speichen, in der Größenordnung von vier bis neun, womit sich relativ großflächige Speichenzwischenräume ergeben. Ein einziges somit auch relativ großes Abdeckelement wäre im den Speichenzwischenraum freilegenden Zustand zumindest bei höheren Fahrgeschwindigkeiten sehr hohen Kräften ausgesetzt, was eine konstruktiv sichere Lösung erheblich erschwert. Daher deckt ein erfindungsgemäßes Abdeckelement nur einen Teilbereich eines Speichenzwischenraumes ab und ist somit kleiner gestaltet, so dass die hierauf einwirkenden Kräfte und Momente geringer sind, wobei erkannt wurde, dass auch ein solches kleineres Abdeckelement im Bedarfsfall einen ausreichenden Durchtritt von Kühlluft durch den dann offengelegten Teilbereich des Speichenzwischenraumes ermöglichen kann. Zur Darstellung eines relativ niedrigen Luftwiderstandes jedenfalls im diesen Teilbereich abdeckenden Zustand ist neben dem nur einen Teilbereich des Speichenzwischenraumes überdeckenden Abdeckelement nach der ersten vorgeschlagenen Lösung ein weiteres Deckelement vorgesehen, welches sich nicht nennenswert verformt und daher sozusagen starr einen anderen Bereich des Speichenzwischenraumes kontinuierlich abdeckt. Nach dem zweiten Lösungsvorschlag ist (in Umfangsrichtung des Rades betrachtet) neben einem ersten (und an der ersten Rand-Speiche des Speichenzwischenraumes befestigten) verformbaren Abdeckelement ein zweites verformbares Abdeckelement an der anderen Speiche dieses Speichenzwischenraumes befestigt vorgesehen, die im nicht verformten Zustand möglichst nahe aneinander grenzen. Im bei höherer Temperatur verformten Zustand wölbt sich eines dieser beiden Abdeckelemente von der Radaußenseite nach außen vom Fahrzeug weg und das andere nach innen zum Fahrzeug hin - hiermit ist ein größerer und strömungsgünstiger gestalteter Einströmquerschnitt darstellbar als beim erstgenannten (andererseits einfacher umsetzbaren) Lösungsvorschlag. Im Übrigen ist auch beim erstgenannten Lösungsvorschlag bevorzugt vorgesehen, das Abdeckelement an einer und das Deckelement an der anderen der beiden den Speichenzwischenraum begrenzenden Speichen zu befestigen.

Bei Vorsehen eines starren, sich nicht verformenden Deckelements ist es im Übrigen nicht obligatorisch, dass dieses Deckelement eine im wesentlichen ebene Formgebung aufweist und mit dieser (im wesentlichen zweidimensionalen) Ebene zumindest annähernd auf der Drehachse des Rades senkrecht steht. Vielmehr kann dieses Deckelement auch geeignet gewölbt gestaltet sein und dann, wenn das Abdeckelement dies aufgrund seiner temperaturabhängigen Verformung zulässt, quasi eine Leit-Funktion oder Schaufel-Funktion für einen durch den zugehörigen Speichenzwischenraum hindurch zu führenden Luftstrom übernehmen. Hierfür kann dieses Deckelement auch von der (unter Bezugnahme auf das Fahrzeug, an welchem das Rad montiert ist) Rad-Außenseite weg weiter nach außen gewölbt sein, wobei das sich temperaturabhängig verformende Abdeckelement bei geringeren Temperaturen im nicht verformten Zustand mit Hilfe seiner geeigneten Formgebung einen dann nicht gewünschten Luftstrom durch den Speichenzwischenraum verhindert. Hierfür kann das Abdeckelement im nicht verformten Zustand auch geringfügig an der Innenseite des Deckelements, d.h. an dessen dem Fahrzeug zugewandten Seite anliegen, jedoch ist dieses Merkmal keinesfalls obligatorisch. Vorteilhaft ist es im Falle einer solchen nicht ebenen Gestaltung des Deckelements jedenfalls, wenn sich das Abdeckelement bei höheren Temperaturen zur Rad-Innenseite bzw. zum Fahrzeug hin verformt, während sich im Falle eines zumindest annähernd ebenen Deckelementes eine bessere, d.h. für einen erwünschten KühlLuftstrom durch die Speichenzwischenräume hindurch strömungsgünstigere Form des (im nicht verformten Zustand im wesentlichen ebenen) Abdeckelements ergibt, wenn sich dieses mit seinem freien Endbereich bei höheren Temperaturen nach außen, d.h. vom Fahrzeug weg verformt, bspw. wölbt.

Weiterhin wurde erkannt, dass es für die Erzielung einer signifikanten Verbesserung des Luftwiderstandsbeiwertes eines Personenkraftwagens ausreichend ist, wenn an dessen Speichenrädern insbesondere der in Radialrichtung weiter außen liegende Teilbereich der Speichenzwischenräume bestmöglich abgedeckt wird bzw. abdeckbar ist, während nabennahe (d.h. in der Nähe des Radmittelpunktes liegende) Abschnitte der Speichenzwischenräume kontinuierlich offen bleiben können, was den Vorteil bietet, dass ein Kühlluftdurchtritt zwischen den Speichen nie völlig unterbunden ist.

Ein günstiges Verformen des Abdeckelements ergibt sich, wenn dieses abstrahiert gesprochen aus zumindest zwei möglichst dicht aufeinander liegenden Plattenelementen zusammengesetzt ist, die im Hinblick auf den erwünschten Bimetalleffekt aus Materialien mit unterschiedlichen Wärmeausdehnungskoeffizienten bestehen und zur Erzielung einer gewünschten Verformung aufgrund unterschiedlicher Wärmeausdehnung geeignet aneinander gekoppelt sind. In der eingangs genannten Schrift ist beschrieben, dass ein solcher Schichtverbund durch Angießen oder Anspritzen einer Kunststoffschicht an eine Faserschicht gebildet sein kann. Vorliegend werden nun für das Abdeckelement zumindest zwei aufeinander liegende Plattenelemente vorgeschlagen, die an mehreren Stellen punktuell bezüglich zumindest einer Achsrichtung eines in der Kontakt-Oberfläche der Plattenelemente liegenden (kartesischen) Koordinatensystems sowie senkrecht zur Kontakt-Oberfläche formschlüssig miteinander verbunden sind. Eine solche Verbindung kann man sich bspw. ähnlich den bekannten LEGO™-Bausteinen vorstellen, welche jedoch abweichend von der LEGO™-Bauart in den einzelnen punktuellen Formschluss-Verbindungsstellen jeweils einen zumindest geringfügigen Hinterschnitt aufweisen sollte, um eine sichere formschlüssige Verbindung in der zur Kontaktfläche der Plattenelemente senkrechten Richtung zu bieten. Beispielsweise kann die formschlüssige Verbindung durch kreisförmige Löcher oder Langlöcher im ersten Plattenelement und mit diesen zusammenwirkenden kugelförmigen Elementen am zweiten Plattenelement gebildet sein. Hierzu kann beispielshalber auf die EP 2 475 475 B1 verwiesen werden, wenngleich dort die formschlüssige Verbindung nur zum losen Vorfixieren eines ersten Bauteils an einem zweiten Bauteil vorgesehen ist und dort die endgültige Verbindung dieser Bauteile stoffschlüssig erfolgt. Das Vorsehen von Langlöchern in einer solchen formschlüssigen hat dabei den besonderen Vorteil, dass damit eine definierte Wölb-Richtung im Rahmen des temperaturabhängigen Verformens des jeweiligen Abdeckelements festgelegt werden kann, nachdem ein solches Langloch für die damit zusammenwirkende Kugel einen Freiheitsgrad in einer Richtung bietet.

Was die Befestigung der Abdeckelemente und/oder der Deckelemente an den Speichen des Rades betrifft, so können diese mit den Speichen verklebt bzw. allgemein stoffschlüssig verbunden sein. Alternativ oder zusätzlich ist jedoch auch eine kraftschlüssige Verbindung möglich, welche lösbar (in Form einer Verschraubung) ausgebildet sein kann. Schließlich besteht auch hier die Möglichkeit einer formschlüssigen Verbindung, bspw. abermals in Form einer an mehreren Stellen vorgesehenen punktuell formschlüssigen Verbindung mit Kugeln am ersten Element und kreisförmigen Löchern am zweiten Element. Im Übrigen ist auch eine formschlüssige Verbindung im Zusammenwirken mit einer Klebeverbindung möglich, zu deren Absicherung bspw. am Abdeckelement heißverpresste Stifte in in den Speichen vorgesehene Löcher hineinragen.

Ein erfindungsgemäßes Abdeckelement besteht vorzugsweise zumindest anteilig aus Kunststoffmaterial, in welchem Verstärkungsfasern enthalten sind. So können bspw. auf einem (bereits genannten) Plattenelement des Abdeckelements, welches aus einem thermoplastischen Kunststoff besteht, bspw. kugelförmige Elemente, welche eine bereits genannte formschlüssige Verbindung zu einem anderen Plattenelement herstellen sollen, das bspw. aus einem Leichtmetall bestehen kann, aufgeschweißt sein. Damit ist ein bereits genannter Hinterschnitt in der formschlüssigen Verbindung einfach darstellbar. Die Löcher oder Langlöcher im anderen Plattenelement können dann einfach spanend hergestellt sein. Selbstverständlich können auch beide oder sämtliche Plattenelemente eines Abdeckelements aus Kunststoffmaterialien bestehen, wobei das (für den Bimetall-Effekt gewünschte) unterschiedliche Wärmeausdehnungsverhalten durch einen unterschiedlichen Anteil und/oder unterschiedliche Art von in der Kunststoffmasse enthaltenen Verstärkungsfasern dargestellt sein kann. Dabei sei ausdrücklich darauf hingewiesen, dass ein erfindungsgemäßes Fahrzeug-Rad nicht aus Plattenelementen zusammengesetzte Abdeckelemente aufweisen muss; vielmehr können diese bspw. auch aus unterschiedlichen stoffschlüssig miteinander verbundenen (bspw. aneinander angespritzten) Kunststoffschichten bestehen, welche sich hinsichtlich der darin enthaltenen Verstärkungsfasern insbesondere durch deren Volumen-Anteil unterscheiden.

Ausführungsbeispiele der Erfindung sind in den beigefügten Figuren abstrahiert dargestellt und werden im Folgenden weiter erläutert; erfindungswesentlich können sämtliche näher beschriebenen Merkmale sein.

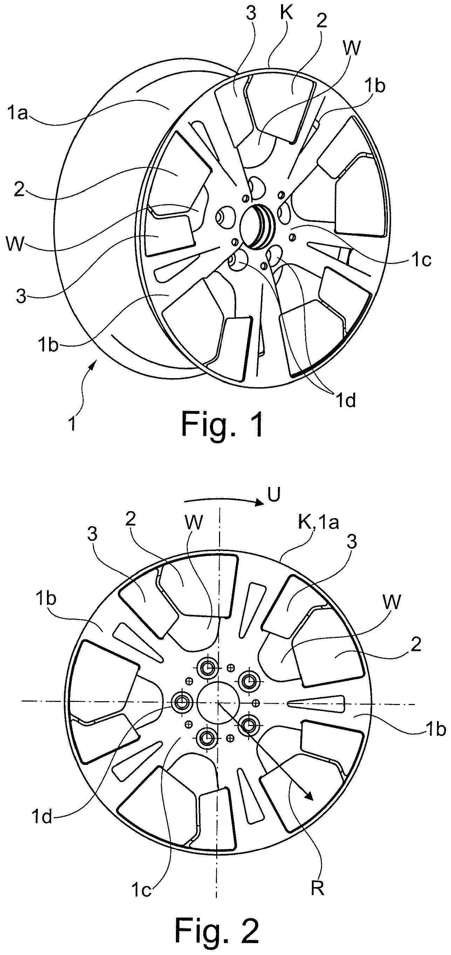

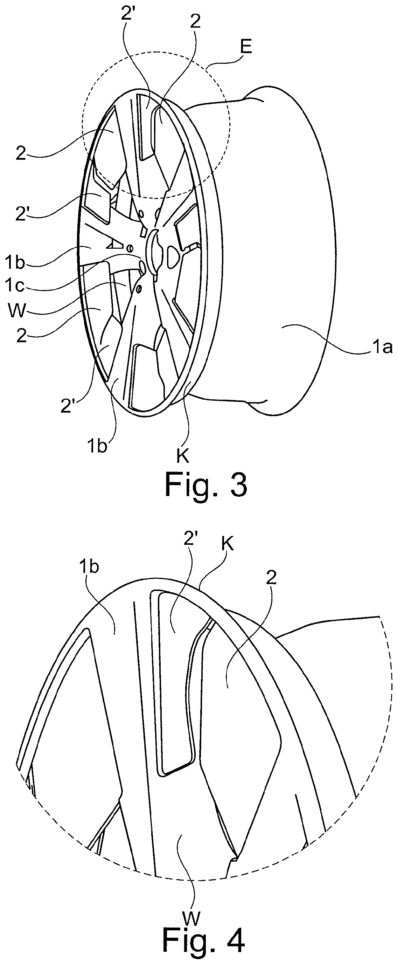

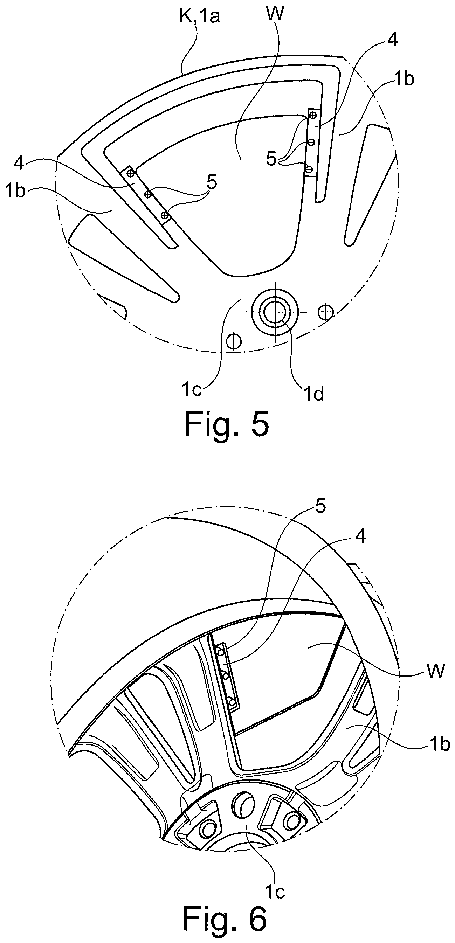

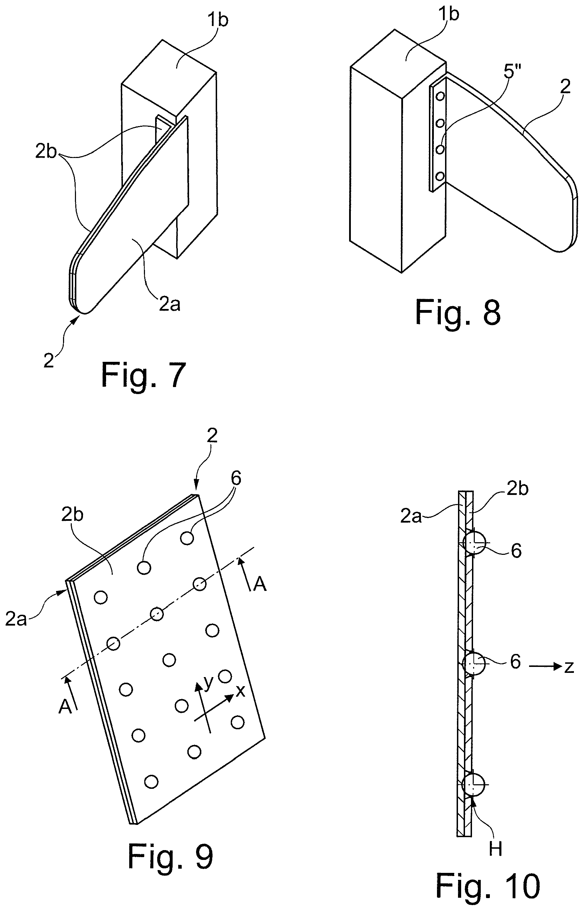

**Figur 1** zeigt ein erfindungsgemäßes Fahrzeug-Rad in isometrischer Ansicht und **Figur 2** dessen Aufsicht von der Außenseite des Fahrzeugs in Drehachsrichtung des Rades betrachtet. **Figur 3** zeigt eine isometrische Ansicht eines erfindungsgemäßen Rades mit zwei geringfügig verformten Abdeckelementen im Speichenzwischraum und **Figur 4** zeigt vergrößert den Ausschnitt E aus Fig.3. **Figur 5** zeigt eine gering isometrische Ansicht eines einzigen Speichenzwischenraumes bei abgenommenem Abdeckelement und Deckelement zur Verdeutlichung von deren Befestigung und **Figur 6** zeigt einen ähnlichen Ausschnitt mit nur einer Speiche in etwas abgewandelter Form. Die **Figuren 7, 8** zeigen stark abstrahiert in isometrischer Darstellung weitere mögliche Anbindungskonzepte für ein Abdeckelement an einer Rad-Speiche, während **Figur 9** in solcher Darstellung einen möglichen Aufbau eines Abdeckelements zeigt. **Figur 10** zeigt (gedreht) den Schnitt A-A aus Fig.9. In sämtlichen Figuren sind gleiche Elemente mit den gleichen Bezugsziffern gekennzeichnet.

So trägt ein einstückiges Rad eines Fahrzeugs, insbesondere eines Personenkraftwagens, die Bezugsziffer 1. Auf dessen Felge 1a wird wie üblich ein Reifen aufgezogen und es ist die Felge 1a über hier fünf Speichen 1b mit dem zentralen Nabenbereich 1c des Rades verbunden, in welchem kreisförmig angeordnet fünf Befestigungslöcher 1d für die Aufnahme von Radschrauben vorgesehen sind, mittels derer das Rad wie üblich an einem Radträger eines Fahrzeugs angeflanscht werden kann.

Zwischen einander in Rad-Umfangsrichtung U benachbarten Speichen 1b befindet sich ein bei üblichen Rädern offener, d.h. praktisch einen Durchbruch darstellender Speichen-Zwischenraum W, durch den insbesondere Luft hindurchströmen kann. Beim vorliegenden erfindungsgemäßen Rad 1 ist zumindest einer Speichen-Zwischenräume W, bevorzugt jedoch jeder der Speichen-Zwischenräume W bereichsweise mittels zumindest eines Abdeckelements 2 betriebspunktabhängig abgedeckt bzw. abdeckbar.

Nun auf die **Figuren 1, 2** Bezug nehmend sind darin je Speichenzwischenraum W ein Abdeckelement 2 und in Rad-Umfangsrichtung U betrachtet neben diesem angeordnet ein Deckelement 3 vorgesehen. Bei diesem Ausführungsbeispiel besitzt sowohl das Deckelement 3 als auch das Abdeckelement 2 in seinem nicht verformten (und somit bei niedrigeren Temperaturen vorliegenden Zustand) eine im Wesentlichen ebene Formgebung, d.h. es weisen diese Elemente 2, 3 dann keine signifikante Wölbung auf. In Radialrichtung R des Rades 1 betrachtet erstrecken sich das Abdeckelement 2 und das Deckelement 3 möglichst weit nach außen nahezu bis zum Rand K des (üblichen) Felgenhorns der Felge 1a. In Radialrichtung R nach innen, d.h. zur Radmitte hin betrachtet enden das Abdeckelement 2 und das Deckelement 3 in gewissem Abstand zum Nabenbereich 1c des Rades 1, so dass ein nabennaher Abschnitt des Speichenzwischenraumes W überhaupt nicht abgedeckt ist.

Der die Rad-Umfangsrichtung U kennzeichnende Pfeil gibt auch die übliche Drehrichtung des am Fahrzeug befestigten Rades bei Vorwärtsfahrt des Fahrzeugs an, weswegen im weiteren auch von der Drehrichtung oder dem Drehsinn U des Rades gesprochen wird. Das bei Betrachtung der Figuren 1, 2 im Speichenzwischenraum W im Rad-Drehsinn U rechts neben bzw. hinter dem Deckelement 3 liegende Abdeckelement 2 ist an der im Rad-Drehsinn U rechtsseitigen bzw. voreilenden Speiche 1b des jeweiligen Speichenzwischenraumes W auf später noch erläuterte Weise befestigt und das im Rad-Drehsinn U vor bzw. links neben dem Abdeckelement 2 liegende Deckelement 3 ist an der im Rad-Drehsinn U linksseitigen bzw. nacheilenden Speiche 1b des jeweiligen Speichenzwischenraumes W auf später noch erläuterte Weise befestigt.

In Drechachsrichtung des Rades 1 betrachtet - diese erstreckt sich bei Figur 2 senkrecht zur Zeichenebene - sind die Abdeckelemente 2 und die Deckelemente 3 möglichst weit außen, d.h. möglichst nahe in Richtung des Betrachters angeordnet, um dann, wenn das Abdeckelement 2 seine Form bei niedrigeren Temperaturen innehat, eine möglichst bündige, d.h. mit den dem Betrachter zugewandten Außenseiten der Speichen 1b strömungsgünstige und möglichst glatte Fläche zu erzielen, welche ähnlich einer ringförmigen Scheibe die Speichenzwischenräume W jedenfalls in deren radial weiter außen liegenden Abschnitten bestmöglich abdeckt, um einen möglichst niedrigen Luftwiderstand bzw. Luftwiderstandsbeiwert des Fahrzeugs, an welchem das Rad 1 montiert ist, zu erzielen. In diesem Sinne liegen auch die einander zugewandten (und sich näherungsweise in Radialrichtung R erstreckenden) Endkanten der in einem Speichenzwischenraum W liegenden Abdeckelemente 2 und Deckelemente 3 möglichst dicht bündig nebeneinander.

Wie vor der Figurenbeschreibung erläutert wurde, sollen sich die Abdeckelemente 2 temperaturabhängig derart verformen, dass diese ausgehend von der im vorstehenden Absatz geschilderten möglichst bündigen bzw. bei Fortbewegung des Fahrzeugs strömungsgünstigen Abdeckung der Speichenzwischenräume W bei höheren Temperaturen in der direkten Umgebung der Abdeckelemente 3 (und insbesondere bei höheren Temperaturen auf deren dem Betrachter von Fig.2 abgewandten Rückseite) auch in dem von ihnen abgedeckten Bereich der Speichenzwischenräume W einen Luftdurchtritt durch diesen genannten Bereich ermöglichen. Damit soll bzw. kann eine auf der dem Fahrzeug zugewandten Seite des Rades vorgesehene Rad-Bremse bei starker Erwärmung derselben durch einen Luftstrom gekühlt werden. Dies ist für ein gegenüber den Figuren 1, 2 abgewandeltes Ausführungsbeispiel in den im Folgenden erläuterten **Figuren 3, 4** dargestellt, d.h. während in den Figuren 1, 2 die Abdeckelemente 2 im nicht verformten und somit üblichen Zustand dargestellt sind, zeigen die Figuren 3, 4 die dortigen Abdeckelemente 2, 2' im aufgrund höherer Temperaturen verformten Zustand.

Beim Ausführungsbeispiel nach den **Figuren 3, 4** sind zwei Abdeckelemente 2, 2' je Speichenzwischenraum W vorgesehen, wobei das erste im Rad-Drehsinn U vordere oder rechte Abdeckelement 2 an gleicher Stelle wie beim Ausführungsbeispiel der Figuren 1, 2 angeordnet ist, während das zweite im Rad-Drehsinn U hintere oder linke Abdeckelement 2' an gleicher Stelle wie das Deckelement 3 des Ausführungsbeispiels der Figuren 1, 2 angeordnet ist. Insbesondere der Detailansicht von Fig.4 ist entnehmbar, dass das hintere Abdeckelement 2' (im figürlich dargestellten verformten Zustand) insbesondere in seinem dem vorderen Abdeckelement 2 zugewandten Endbereich nach außen, d.h. vom Fahrzeug weg gewölbt ist, so dass zwischen den beiden Abdeckelementen 2, 2' ein Spalt gebildet ist, durch den Kühlluft hindurch und dann weiter durch den Speichenzwischenraum W hindurch von der Rad-Außenseite zur Rad-Innenseite und zur dort liegenden Radbremse gelangen kann. Vergrößert wird dieser Spalt S dabei dadurch, dass das vordere (und bei der Darstellung von Fig.4 auch weiter vorne, d.h. näher zum Betrachter liegende) Abdeckelement 2, welches hier ebenfalls im verformten Zustand dargestellt ist, in seinem dem anderen Abdeckelement 2' zugewandten Endabschnitt aufgrund höherer Temperaturen geringfügig nach innen, d.h. zur dem Fahrzeug zugewandten Innenseite des Rades hin gewölbt ist - wenngleich dies in diesen Figurendarstellungen kaum sichtbar ist). Im nicht dargestellten nicht verformten Zustand grenzen dabei die einander zugewandten Kanten der Abdeckelemente 2, 2' möglichst eng aneinander an.

Nun nochmals kurz auf das Ausführungsbeispiel der **Figuren 1, 2** zurücckommend ist bei diesem das sich temperaturabhängig verformende Abdeckelement 2 vorzugsweise solchermaßen gestaltet, dass sich dieses (analog dem Abdeckelement 2' des Beispiels der Figuren 3, 4) bei höheren Temperaturen nach außen wölbt, da hiermit ein strömungsgünstigerer bzw. größerer Spalt zwischen dem gewölbten bzw. verformten Abdeckelement 2 und dem Deckelement 3 darstellbar ist, als wenn die Verformung bzw. Wölbung zur Rad-Innenseite hin erfolgen würde.

Anhand der **Figuren 3, 4** kann nun noch ein weiteres mögliches Ausführungsbeispiel der Erfindung beschrieben werden, bei welchem die in den Figuren 3, 4 mit der Bezugsziffer 2' gekennzeichneten Abdeckelemente als nicht verformbare Deckelemente ausgeführt sind und somit anstelle der Bezugsziffer 2' die Bezugsziffer 3 tragen würden. Die Deckelemente (3) dieses weitern möglichen Ausführungsbeispiels wären (anders als die Deckelemente 3 des ersten Ausführungsbeispiels von Fig. 1, 2) uneben und wirkten im in den Figuren 3, 4 dargestellten Zustand der Abdeckelemente 2 als Luftleitschaufeln oder dgl. Mit solchen unebenen nach außen gewölbten Deckelementen 3 würden sich die Abdeckelemente 2 anders als beim ersten Ausführungsbeispiel bevorzugt nach innen verformen.

Nun auf die **Figuren 5, 6** Bezug nehmend ist darin eine mögliche Ausführungsform für die Befestigung eines Abdeckelements (2, 2' - nicht gezeigt) und Deckelements (3 - ebenfalls nicht gezeigt) dargestellt. Befestigt werden diese Elemente vorrangig an den Speichen 1b, da dort eine ausreichend große Fläche für eine sichere Befestigung zur Verfügung steht und da eine dortige Befestigung ermöglicht, das verformbare Abdeckelement auch mit seiner dem Felgenhorn (bzw. dessen Außenkante K) zugewandten Randbereich vom Felgenhorn abheben zu lassen und damit einen möglichst großen Spalt bzw. Freiraum für den Durchtritt eines Luftstromes durch den Speichenzwischenraum W darstellen zu können. Wie Fig.5 zeigt ist an jeder Speiche 1b an deren dem jeweiligen bzw. angrenzenden Speichenzwischenraum W zugewandten Seite ein Befestigungsflansch 4 vorgesehen, der zunächst eben ausgebildet ist und eine Möglichkeit für die Anbringung von hier drei (ggf. zusätzlichen) Befestigungselementen 5 vorsieht. Auf den abseits der Befestigungselemente 5 ebenen Befestigungsflansch 4 kann das Abdeckelement (2) oder Deckelement (3) mit einem entsprechend gestalteten Flächenabschnitt aufgeklebt werden oder sein und es können zusätzlich kraftschlüssige oder formschlüssige Sicherungs-Elemente als Befestigungselemente 5 vorgesehen sein.

Beim Ausführungsbeispiel nach **Fig.5** ist der Befestigungsflansch 4 aus der Grundstruktur der Speiche 1b ausgefräst und es sind als (ggf. zusätzlich zur genannten Klebeverbindung vorgesehene) Befestigungselemente 5 Durchtrittsbohrungen für nicht gezeigte Schrauben vorgesehen, mittels derer das Abdeckelement 2 bzw. das Deckelement 3 an der jeweiligen Speiche 1b angeschraubt werden kann. Beim Ausführungsbeispiel nach **Fig.6** hingegen ist ein Befestigungsflansch 4 geeignet an die Grundstruktur der Speiche 1b angeformt und es sind als Befestigungselemente 5' nietartige Stifte an diesem Befestigungsflansch 4 vorgesehen, auf die das Abdeckelement (2) oder Deckelement (3) mit entsprechenden Löchern quasi aufgesteckt wird, wonach aus den dann überstehenden Abschnitten dieser Stifte jeweils ein Nietkopf gebildet werden kann.

**Figur 7** zeigt eine andere Möglichkeit zur Herstellung einer Klebeverbindung oder andersartigen Verbindung zwischen einem Abdeckelement 2 (oder Deckelement) und einer Speiche 1b lediglich im Prinzip. Hier ist das Abdeckelement 2 aus zwei Plattenelementen 2a, 2b bestehend aufgebaut, die mit ihren größeren Platten-Oberflächen über einen weiten Bereich fest aufeinander aufliegend aus Materialien mit unterschiedlichen Wärmeausdehnungskoeffizienten geformt sind. In demjenigen Endbereich des Abdeckelementes 2, in oder mit welchem dieses an der Speiche 1b befestigt wird, ist das Plattenelement 2b gegenüber dem Plattenelement 2a abgewinkelt, d.h. ein Endstreifen des Plattenelements 2b steht dort bspw. rechtwinkelig von der Platten-Oberfläche des Plattenelements 2a ab. Mit der so gebildeten Eckstruktur kann das Abdeckelement 2 sodann sicher und fest an einem damit korrespondierenden Eckabschnitt der Speiche 1b festgeklebt werden.

Eine weitere Möglichkeit der Befestigung eines Abdeckelements 2 (oder Deckelements) an der Speiche 1b zeigt **Figur 8**. Auch hier ist ein für die Befestigung vorgesehener Endstreifen des Abdeckelements 2 abgewinkelt, hier jedoch anders als bei Fig. 7 vollständig, d.h. im Falle mehrerer aufeinander liegender Plattenelemente sind diese sämtlich abgewinkelt. Dieser abgewinkelte Endstreifen nun direkt eine dem Speichenzwischenraum (W) zugewandte Innenseite der Speiche 1b geeignet angeflanscht, bspw. angeklebt und/oder angeschraubt oder zusätzlich zu einer stoffschlüssigen Klebeverbindung nach Art einer Clipsverbindung an mehreren, hier vier Formschluss-Punkten 5" formschlüssig verbunden. Diese Formschlussverbidung weist einen Hinterschnitt auf und kann durch kreisförmige Löcher bspw. in der Speiche 1b und mit diesen zusammenwirkenden kugelförmigen Elementen am Abdeckelement 2, welche unter geringfügiger elastischer Verformung in das jeweils zugeordnete Loch in der Speiche 1b eingepresst sind, gebildet sein.

Anhand der **Figuren 9, 10** wird nun eine mögliche und der zuletzt genannten formschlüssigen Verbindung ähnliche und ausschließlich formschlüssige Verbindung zwischen zwei aufeinander liegenden Plattenelementen 2a, 2b eines Abdeckelements 2 erläutert. Dabei sind in einem in Fig.9 oben liegenden und in der Schnittansicht von Fig.10 rechts liegenden Plattenelement 2b Löcher eingebracht, durch welche im zusammengefügten Zustand der Plattenelemente 2a, 2b jeweils ein kugelförmiges Element 6, welches am in Fig.9 unteren (bzw. in Fig.10 links liegenden) Plattenelement 2a an geeigneter Stelle fest angebracht (bspw. angeschweißt) ist, zumindest soweit hindurchragt, dass ein aus Fig.10 hervorgehender Hinterschnitt H gebildet ist. Soweit es sich um kreisförmige Löcher im Plattenelement 2b handelt, sind damit die beiden Plattenelemente 2a, 2b nicht nur in der zur Platten-oberfläche senkrechten z-Richtung eines kartesischen Koordinatensystems, sondern auch in der x-Richtung und y-Richtung dieses mit seinem Ursprung bspw. in der Plattenoberflächenebene zwischen den beiden Plattenelementen 2a, 2b liegenden Koordinatensystems formschlüssig vollumfänglich zueinander fixiert. Aus diesen **Figuren 9, 10** nicht hervor geht eine besonders bevorzugte und weiter oben vor der Figurenbeschreibung erläuterte Ausführungsform, wonach die besagten Löcher (im Plattenelement 2b) als Langlöcher ausgebildet und solchermaßen angeordnet sind, dass im vorstehend genannten Koordinatensystem bspw. in y-Richtung eine geringe Relativbewegung zwischen den Plattenelementen 2a, 2b möglich ist, während eine fixe formschlüssige Verbindung nur in x-Richtung und z-Richtung dargestellt ist. Damit ist die Achse, um die sich ein entsprechend aus zumindest zwei Plattenelementen 2a, 2b aufgebautes Abdeckelement bei temperaturbedingter unterschiedlicher Wärmeausdehnung wölbt, gezielt festlegbar. Und nochmals kurz auf das Herstellen der Plattenelemente 2a mit den damit fest verbundenen kugelförmigen Elemente 6 eingehend können die Kugel-Elemente 6 und die Plattenelemente 2a aus einem thermoplastischen Kunststoff bestehen und durch Ultraschallschweißen stoffschlüssig verbunden sein.

## Patentansprüche

1. Fahrzeug-Rad (1) mit Speichen (1b), an denen Abdeckelemente (2) für Speichen-Zwischenräume (W) vorgesehen sind, welche sich temperaturabhängig derart verformen, dass bei höheren Temperaturen ein Luftdurchtritt durch einen Bereich des jeweiligen Speichen-Zwischenraums (W) möglich ist, welcher bei niedrigeren Temperaturen vom Abdeckelement (2) abgedeckt ist, **dadurch gekennzeichnet dass** die Abdeckelemente (2) die jeweiligen Speichen-Zwischenräume (W) nicht vollflächig überdecken und je Zwischenraum (W) neben einem sich temperaturabhängig verformenden Abdeckelement (2) ein starres Deckelement (3) vorgesehen ist, das den ihm zugeordneten Speichenzwischenraum-Bereich kontinuierlich abdeckt.

2. Fahrzeug-Rad nach Anspruch 1, wobei das starre Deckelement (3) eine solchermaßen von einer ebenen Form abweichende abschnittsweise nach außen von der Rad-Außenseite weg gewölbte Formgebung aufweist, dass das bei höheren Temperaturen zur Rad-Innenseite hin verformte Abdeckelement (2) einen Luftdurchtritt durch den Speichenzwischenraum (W) freigibt und bei niedrigeren Temperaturen im nicht verformten Zustand trotz der Wölbung des Deckelements (3) einen solchen Luftdurchtritt verhindert.

3. Fahrzeug-Rad (1) mit Speichen (1b), an denen Abdeckelemente (2, 2') für Speichen-Zwischenräume (W) vorgesehen sind, welche sich temperaturabhängig derart verformen, dass bei höheren Temperaturen ein Luftdurchtritt durch einen Bereich des jeweiligen Speichen-Zwischenraums (W) möglich ist, welcher bei niedrigeren Temperaturen vom Abdeckelement (2) abgedeckt ist,
**dadurch gekennzeichnet, dass** in jedem Speichenzwischenraum (W) zwei in Rad-Umfangsrichtung (U) nebeneinander liegende Abdeckelemente (2, 2') vorgesehen sind, die an verschiedenen Speichen (1b) befestigt sind und im nicht verformen Zustand mit ihren den Speichen (1b) abgewandten Kanten eng aneinander grenzen, während im verformten Zustand eines der Abdeckelemente (2') in Rad-Drehachsrichtung betrachtet nach außen weg vom Fahrzeug gewölbt ist und das andere Abdeckelement (2) nach innen zum Fahrzeug hin gewölbt ist.

4. Fahrzeug-Rad nach einem der vorhergehenden Ansprüche, wobei nabennahe Abschnitte der Speichen-Zwischenräume (W) kontinuierlich offen sind.

5. Fahrzeug-Rad nach einem der vorhergehenden Ansprüche, wobei das sich temperaturabhängig verformende Abdeckelement (2) aus zumindest zwei aufeinander liegenden Plattenelementen (2a, 2b) zusammengesetzt ist, die an mehreren Stellen punktuell bezüglich zumindest einer Achsrichtung eines in der Kontakt-Oberfläche der Plattenelemente (2a, 2b) liegenden Koordinatensystems sowie senkrecht zur Kontakt-Oberfläche formschlüssig miteinander verbunden sind.

6. Fahrzeug-Rad nach Anspruch 5, wobei die punktuellen formschlüssigen Verbindungen durch kreisförmige Löcher oder Langlöcher im ersten Plattenelement (2b) und mit diesen zusammenwirkenden kugelförmigen Elementen (6) am zweiten Plattenelement (2a) gebildet sind.

7. Fahrzeug-Rad nach einem der vorangegangenen Ansprüche, wobei die Abdeckelemente (2) und/oder Deckelemente (3) mit den Speichen (1b) des Rads (1) verklebt sind.

8. Fahrzeug-Rad nach einem der vorangegangenen Ansprüche, wobei die Abdeckelemente (2) und/oder Deckelemente (3) lösbar kraftschlüssig und/oder an mehreren Stellen punktuell formschlüssig mit den Speichen (1b) verbunden sind.

9. Fahrzeug-Rad nach einem der vorangegangenen Ansprüche, dessen Abdeckelemente (2) schichtweise aus Kunststoffmaterial mit in den einzelnen Schichten unterschiedlichem Anteil von Verstärkungsfasern aufgebaut sind.

## Claims

1. Vehicle wheel (1) having spokes (1b), on which cover elements (2) are provided for spaces (W) between the spokes, which deform according to the temperature in such a way that, at higher temperatures, a passage of air through a region of the respective space (W) between the spokes is possible, which is covered by the cover element (2) at lower temperatures,
**characterized in that** the cover elements (2) do not entirely cover the respective spaces (W) between the spokes, and a rigid cap element (3) is provided per intermediate space (W) in addition to a cover element (2) deforming according to the temperature, which continuously covers the region of the space between spokes associated with it.

2. Vehicle wheel according to Claim 1, wherein the rigid cap element (3) has a configuration which deviates for a portion from a flat shape and is curved outward away from the outside of the wheel, such that the cover element (2) deformed toward the inside of the wheel at higher temperatures frees up a passage of air through the space (W) between the spokes and at lower temperatures in the non-deformed state it prevents such a passage of air despite the curvature of the cap element (3).

3. Vehicle wheel (1) having spokes (1b), on which cover elements (2, 2') are provided for spaces (W) between the spokes, which deform according to the temperature in such a way that, at higher temperatures, a passage of air through a region of the respective space (W) between the spokes is possible, which is covered by the cover element (2) at lower temperatures,
**characterized in that** two cover elements (2, 2') are provided in each space (W) between the spokes, situated next to each other in the circumferential direction (U) of the wheel, and secured to different spokes (1b), and in the non-deformed state they border closely against each other by their edges facing away from the spokes (1b), while in the deformed state one of the cover elements (2') is curved outward away from the vehicle, looking in the direction of the wheel's axis of rotation, and the other cover element (2) is curved inward toward the vehicle.

4. Vehicle wheel according to one of the preceding claims, wherein sections of the spaces (W) between the spokes which are close to the hub are open continuously.

5. Vehicle wheel according to one of the preceding claims, wherein the cover element (2) deforming according to the temperature is composed of at least two plate elements (2a, 2b) lying one against the other, which are connected together in a form-fitting manner at several spot-like points in regard to at least one axial direction of a coordinate system situated in the contact surface of the plate elements (2a, 2b) and perpendicular to the contact surface.

6. Vehicle wheel according to Claim 5, wherein the spot-like form-fitting connections are formed by circular holes or oblong holes in the first plate element (2b) and spherical elements (6) interacting with these on the second plate element (2a).

7. Vehicle wheel according to one of the preceding claims, wherein the cover elements (2) and/or cap elements (3) are glued to the spokes (1b) of the wheel (1) .

8. Vehicle wheel according to one of the preceding claims, wherein the cover elements (2) and/or cap elements (3) are connected to the spokes (1b) by releasable force-locking and/or by spot-like form-fitting at multiple points.

9. Vehicle wheel according to one of the preceding claims, whose cover elements (2) are constructed in layers from plastic material with differing fraction of reinforcing fibers in the individual layers.

## Revendications

1. Roue de véhicule (1) comprenant des rayons (1b) sur lesquels sont prévus des éléments de recouvrement (2) pour des espaces intermédiaires entre les rayons (W), qui se déforment en fonction de la température de telle sorte qu'à des températures plus élevées, un passage d'air soit possible à travers une région de l'espace intermédiaire respectif entre les rayons (W), lequel espace intermédiaire est recouvert par l'élément de recouvrement (2) en cas de températures moins élevées,
**caractérisée en ce que** les éléments de recouvrement (2) ne recouvrent pas complètement les espaces intermédiaires respectifs entre les rayons (W) et pour chaque espace intermédiaire (W) à côté d'un élément de recouvrement (2) se déformant en fonction de la température, il est prévu un élément de couvercle rigide (3) qui recouvre de manière constante la région de l'espace intermédiaire entre les rayons qui lui est associée.

2. Roue de véhicule selon la revendication 1, dans laquelle l'élément de couvercle rigide (3) présente une forme s'écartant d'une forme plane, en partie cintrée vers l'extérieur à l'écart du côté extérieur de la roue, de telle sorte que l'élément de recouvrement (2) déformé vers le côté intérieur de la roue en cas de températures plus élevées libère un passage d'air à travers l'espace intermédiaire entre les rayons (W) et empêche un tel passage d'air en cas de températures moins élevées dans l'état non déformé, malgré le cintrage de l'élément de couvercle (3).

3. Roue de véhicule (1) comprenant des rayons (1b) sur lesquels sont prévus des éléments de recouvrement (2, 2') pour des espaces intermédiaires entre les rayons (W), qui se déforment en fonction de la température de telle sorte qu'à des températures plus élevées, un passage d'air soit possible à travers une région de l'espace intermédiaire respectif entre les rayons (W), lequel espace intermédiaire est recouvert par l'élément de recouvrement (2) en cas de températures moins élevées,
**caractérisée en ce que** dans chaque espace intermédiaire entre les rayons (W) sont prévus deux éléments de recouvrement (2, 2') disposés l'un à côté de l'autre dans la direction périphérique de la roue (U), lesquels sont fixés à des rayons différents (1b) et, dans l'état non déformé, sont étroitement adjacents l'un à l'autre avec leurs arêtes opposées aux rayons (1b) tandis que dans l'état déformé, l'un des éléments de recouvrement (2'), vu dans la direction de l'axe de rotation de la roue, est cintré vers l'extérieur à l'écart du véhicule et l'autre élément de recouvrement (2) est cintré vers l'intérieur vers le véhicule.

4. Roue de véhicule selon l'une quelconque des revendications précédentes, dans laquelle des portions, proches du moyeu, des espaces intermédiaires entre les rayons (W) sont ouvertes en continu.

5. Roue de véhicule selon l'une quelconque des revendications précédentes, dans laquelle l'élément de recouvrement (2) se déformant en fonction de la température est constitué d'au moins deux éléments de plaque superposés (2a, 2b) qui sont connectés l'un à l'autre par engagement positif au niveau de plusieurs emplacements de manière ponctuelle par rapport à au moins une direction axiale d'un système de coordonnées situé dans la surface de contact des éléments de plaque (2a, 2b) et perpendiculairement à la surface de contact.

6. Roue de véhicule selon la revendication 5, dans laquelle les connexions ponctuelles par engagement positif sont formées par des trous circulaires ou des trous oblongs dans le premier élément de plaque (2b) et par des éléments de forme sphérique (6) coopérant avec ceux-ci au niveau du deuxième élément de plaque (2a).

7. Roue de véhicule selon l'une quelconque des revendications précédentes, dans laquelle les éléments de recouvrement (2) et/ou les éléments de couvercle (3) sont collés aux rayons (1b) de la roue (1).

8. Roue de véhicule selon l'une quelconque des revendications précédentes, dans laquelle les éléments de recouvrement (2) et/ou les éléments de couvercle (3) sont connectés aux rayons (1b) de manière amovible par engagement par force et/ou en plusieurs endroits ponctuellement par engagement positif.

9. Roue de véhicule selon l'une quelconque des revendications précédentes, dont les éléments de recouvrement (2) sont construits en couches de matière plastique avec une proportion de fibres de renforcement différente dans les couches individuelles.
